# EUROPÄISCHE PATENTSCHRIFT

(11) **EP 1 095 699 B1**
(45) Veröffentlichungstag und Bekanntmachung des Hinweises auf die Patenterteilung: **18.01.2006**
(21) Anmeldenummer: 00122753.7
(22) Anmeldetag: 19.10.2000
(51) Int. Cl.: B01J 19/28

(54) **Verfahren zur Durchführung einer Mehrphasenreaktion nach dem Gegenstromprinzip einer flüssigen und gasförmigen Phase und Vorrichtung zur Durchführung des Verfahrens**
Process for performing a multiphase reaction of a liquid phase and a gas phase in countercurrent flow and an apparatus therefore
Procédé et installation pour effectuer une réaction à phases multiples d'une phase liquide et une phase gazeuse à contre-courant

(30) Priorität: 29.10.1999 EP 99121608
(43) Veröffentlichungstag der Anmeldung: 02.05.2001
(73) Patentinhaber: T + T Oleochemie GmbH, 63755 Alzenau (DE)
(72) Erfinder: Best, Bernd, 64546 Mörfelden/Walldorf (DE); Brunner, Karlheinz, Dr., 63538 Grosskrotzenburg (DE); Frische, Rainer, Dr., 60529 Frankfurt (DE); Kilian, Dirk, Dr., 63477 Maintal (DE); Seemann, Joachim, Dr., 64354 Reinheim (DE)
(74) Vertreter: Grünberg, Thomas

(56) Entgegenhaltungen:
- CH-A- 507 734
- DE-A- 2 038 860
- FR-A- 2 429 608
- US-A- 3 855 368

## Beschreibung

Die Erfindung betrifft ein Verfahren zur Durchführung einer Mehrphasenreaktion nach dem Gegenstromprinzip einer flüssigen und gasförmigen Phase gemäß dem Oberbegriff des Patentanspruchs 1 und eine Vorrichtung zur Durchführung des Verfahrens.

In der Chemie stellt sich häufig die Aufgabe, Mehrphasenreaktionen in Form von Trennoperationen und insbesondere chemische Reaktionen in Mehrphasensystemen durchzuführen. Entscheidend ist hierbei die Phasentransfergeschwindigkeit der abzutrennenden bzw. zur Reaktion zu bringenden Komponenten der jeweiligen Phasen. Bekanntermaßen kann die Geschwindigkeit der Reaktion wesentlich dadurch erhöht werden, daß die in Kontakt stehenden Oberflächen der jeweiligen Phasen vergrößert werden. Diese Vergrößerung kann durch intensives Vermischen der Phasen miteinander erfolgen. Weiterhin ist bekannt, daß Mehrphasenreaktionen insbesondere bei kontinuierlicher Prozessführung im Gegenstrom besonders effizient und schnell ablaufen können. Wie weiter unten ausgeführt, treten jedoch gerade bei der Anwendung des Gegenstromprinzips häufig gravierende Probleme auf, so daß auch nach dem Gleichstromprinzip gearbeitet wird.

Ein besonderes Problem der Mehrphasenreaktion stellen Gas-Flüssig- bzw. Gas-Fest-Phasenreaktionen dar, und dies vor allem dann, wenn in einem Trägergas gelöste, gasförmige Komponenten mit in flüssigen Phasen gelösten, emulgierten oder suspendierten Komponenten zur Reaktion gebracht werden sollen. Aufgrund der äußerst hohen Unterschiede der Massendichte von Gasen auf der einen Seite und Flüssigkeiten bzw. Feststoffen auf der anderen Seite, - bei Normaldruck ergibt sich hier ein Verhältnis von ca. 1:1000 und mehr -, müssen riesige Gasvolumina mit relativ geringen, gegebenenfalls feststoffhaltigen Flüssigkeitsvolumina in Kontakt gebracht werden.

Zudem werden bei der Gas-Flüssig-Mehrphasenreaktionen häufig nicht homogene Flüssigkeiten, sondern Flüssigkeitsgemische zur Reaktion gebracht. Das Strömungsverhalten derartiger Gemische ist insbesondere, wenn sie als Emulsionen vorliegen, äußerst kompliziert. So können z.B. Oberflächeneffekte zur teilweisen Spaltung der Emulsion führen. Durch unterschiedliche die Fließgeschwindigkeiten vermindernde Eigenschaften, wie z.B. Unterschiede der Viskositäten der Flüssigkeiten und/oder Unterschiede im Haftvermögen der Flüssigkeiten auf den Reaktoroberflächen können Störungen bei der Durchführung der Gas-Flüssig-Mehrphasenreaktionen bewirkt werden.

Die Komplexität von Gas-Flüssig-Mehrphasenreaktionen und des physikalisch-chemischen Verhaltens der jeweiligen Komponenten ist insbesondere bei heterogen zusammengesetzter flüssiger Phase derart hoch, daß eine Vorausberechnung deren Fließverhalten in Reaktoren praktisch nicht möglich ist. Hingewiesen sei z.B. darauf, daß selbst bei zwei nicht miteinander mischbaren flüssigen Phasen bereits zwei Typen von Emulsionen auftreten können: Phase 1 in Phase 2 und Phase 2 in Phase 1. Fließverhalten, Viskosität, Haftvermögen und andere physikalisch-chemische Eigenschaften der beiden Emulsionstypen können erhebliche Unterschiede aufweisen, so daß sich bei chemischer Reaktion das Fließverhalten der flüssigen Phase im Reaktor verändern kann. Zudem können z.B. Oberflächeneffekte zur teilweisen Spaltung der Emulsion führen.

Unter der Vielzahl der Möglichkeiten, die Effizienz und Geschwindigkeit von Reaktionen mit bzw. in Phasengemischen zu erhöhen, sei auf die Durchführung der Reaktionen durch das Versprühen von Flüssigkeiten (Lösungen, Emulsionen und Suspensionen) in das Reaktionsgas und insbesondere die Durchführung der Reaktionen in Röhrenreaktoren mit Einbauten zur Vergrößerung der Oberflächen hingewiesen.

Bei der Durchführung von Gas-Flüssig-Mehrphasenreaktionen in Röhrenreaktoren nach dem Gegenstromprinzip arbeitet man in der Regel bei absteigend fließender Flüssigkeit in Form eines frei fallenden Flüssigkeitsfilms, dem sogenannten Fallfilm, und aufsteigend strömendem Gas. Dabei stellt die Gasphase bei nicht bepackten sowie auch bei bepackten Reaktoren stets eine kontinuierliche Phase dar und bewegt sich angenähert in Form einer Pfropfenströmung durch den Reaktor. Insbesondere im Fall hoher Strömungsgeschwindigkeiten einer oder beider Phasen und damit speziell auch bei sehr großem Unterschied im Volumenstrom von Gas und Flüssigkeit tritt bei derartigen Reaktoren ein erhebliches prinzipielles Problem auf. So ist bei der weiter unten erläuterten Ozonierung ungesättigter Fettsäuren die Geschwindigkeit des Gasstromes auf wesentlich höhere Werte als die Geschwindigkeit der Flüssigkeit einzustellen. Die der Flüssigkeit entgegen strömenden Gasmengen verringern durch Reibungskräfte die Ablaufgeschwindigkeit der Flüssigkeit. Dadurch kann es bekanntermaßen insbesondere bei Reaktoren mit Einbauten dazu kommen, daß im Reaktor eine sich selbst aufbauende Ablaufsperre für die Flüssigkeiten entsteht, welche den störungsfreien Betrieb des Reaktors verhindert (der Reaktor "säuft ab"). Die Grenze der jeweiligen Geschwindigkeit von Gas oder Flüssigkeit, bei der dieses Phänomen des Flutens auftritt, bezeichnet man auch als den Flutpunkt. Ein stationärer Gegenstrombetrieb ist oberhalb des Flutpunktes nicht möglich. Da man unterhalb der Geschwindigkeiten arbeiten muß, bei denen ein Fluten auftritt, sind bei vielen Reaktionen und gerade auch bei der Ozonierung die möglichen Reaktordurchsätze zu gering.

Aus den genannten Gründen wird häufig ein im Gleichstrom betriebener Reaktor eingesetzt. Bei der Reaktionsführung im Gleichstrom fließen die gasförmige Phase (Trägergas und gasförmige reaktive Komponente) und die flüssige Phase in gleicher Richtung. Bei stöchiometrischem Einsatz der Reaktanten muß man in der Regel wegen des großen Dichteunterschiedes einen sehr viel höheren Volumenstrom für das Gas im Vergleich zu der Flüssigkeit und somit eine wesentlich höhere Strömungsgeschwindigkeit des Gases vorgeben. Durch die Reibungskräfte an der Grenzfläche zwischen Gas und Flüssigkeit wird die Strömungsgeschwindigkeit der flüssigen Phase erhöht. Dies ermöglicht, daß selbst solche den Strömungswiderstand erhöhende und damit die Fließgeschwindigkeit verringernde und die Oberflächen vergrößernde Reaktoreinbauten verwendet werden können, die im Gegenstrom nicht durchströmt würden.

Der Nachteil der Gleichstromprinzipanwendung ist jedoch, daß die Verweilzeit des Gases und damit der gasförmigen Reaktanten im Reaktor aufgrund der hohen Strömungsgeschwindigkeit relativ kurz ist. Darüber hinaus liegt bei Gleichstromreaktoren grundsätzlich eine ungünstige Temperatur- und Konzentrationsverteilung der Reaktanten über die Länge des Reaktors vor. Im Eintritt in den Reaktor haben sowohl die Flüssig- als auch die Gasphase bezüglich der Reaktanten hohe Konzentrationen, im Ablauf jedoch in beiden Phasen sehr niedrige Konzentrationen. Daraus ergeben sich z.B. bei exothermen Reaktionen eine hohe Wärmeentwicklung und damit ein hoher Stoffumsatz bei Eintritt der Komponenten in den Reaktor und bei Austritt eine geringe Wärmeentwicklung und damit ein geringer Umsatz. Um dennoch einen vollständigen Umsatz zu erzielen, werden z.B. mehrere Gleichstromreaktoren im Kreuzstrom geschaltet, um sich dem Gegenstromprinzip zu nähern.

Bei einem tatsächlich im Gegenstrom geführten Prozeß ist hingegen prinzipbedingt der Umsatz an Produkt über die Reaktorlänge gleichmäßig verteilt. Ein vollständiger Umsatz der Reaktanten ist bei dieser Art der Prozeßführung sehr viel einfacher realisierbar. Ebenso ist die Prozeßkontrolle auch bei exothermen Reaktionen wesentlich einfacher durchführbar. Ein Beispiel für eine seit langem bekannte und industriell großtechnisch durchgeführte Gas-Flüssig-Mehrphasenreaktionen, bei dem sich die oben dargelegten Probleme stellen, sind die oben bereits erwähnte Ozonolyse von ungesättigten organischen Verbindungen mit Ozon in Sauerstoff oder Luft und die anschließende oxidative Spaltung der bei der Ozonolyse entstehenden Ozonide mit Sauerstoff oder Luft. Die industriell sicherlich bedeutendste Ozonolyse findet Anwendung bei der oxidativen Spaltung der Ölsäure mittels Ozon und Sauerstoff. Hierbei wird Ölsäure in Anwesenheit von Pelargonsäure und Wasser mit einem Ozon-/Sauerstoff-Gemisch bzw. Ozon-Luft-Gemisch zunächst zum Ölsäureozonid in einer Reaktionssäule gegebenenfalls mit entsprechenden Einbauten umgesetzt und anschließend das entstandene Ozonid in einem zweiten Reaktor in die entsprechenden Carbonsäuren gespalten bzw, weiter oxidiert.

Obwohl das chemische Prinzip der Reaktion sehr einfach und lange bekannt ist, ist aus den bereits genannten Gründen deren technische Durchführung anspruchsvoll. Es handelt sich um ein System, bei dem zwei nicht miteinander mischbare Flüssigkeiten, Wasser und organische Säure, mit Sauerstoff als Gas bei sehr großen Unterschieden bezüglich des Strömungsvolumens von Gas und Flüssigkeiten umzusetzen sind. Das entstehende Ölsäureozonid hat grundlegend andere physikalisch-chemische Eigenschaften (beispielsweise bezüglich Haftungsvermögen, Viskosität, Löslichkeit, Polarität, Schmelzpunktes, Emulgiereigenschaften) als die Ölsäure. Unter anderem aus diesem Grund wird bei der technischen Ozonolyse der Ölsäure eine nicht reagierende zweite Fettsäure, die Pelargonsäure, zugesetzt. Die Pelargonsäure dient zudem nach der Reaktion der Ölsäure zum Ozonid dem Ozonid als Lösemittel. Um die Reaktionswärme abführen zu können, wird ferner Wasser zugesetzt. Die Reaktion wird so geführt, daß die Wärmetönung der Reaktion zum einen durch die Wärmekapazität der Reaktionslösung einschließlich des Wassers und zum anderen vor allem durch die Verdampfungsenergie aufgenommen wird, die dem Reaktionsgemisch bei der Verdunstung der flüssigen Phase und speziell des Wassers bis zur Dampfsättigung des durchströmenden, zunächst trockenen Gases entzogen wird.

Diese Gründe führten dazu, daß für die Ozonolyse der Ölsäure die besagte Kreuzstrom-Reaktoranordnung mit mehreren im Gleichstrom betriebenen Röhrenreaktoren entwickelt wurde. Wird die Ozonolyse in einem nach dem Gegenstrom arbeitenden Reaktor durchgeführt, so wird dieser mit geringen Strömungsgeschwindigkeiten der Phasen gefahren und hat daher zur Erzielung eines nennenswerten Stoffumsatzes ein entsprechend großes Reaktorvolumen bzw. große Reaktorabmessungen.

Außer der beschriebenen Möglichkeit, eine Gas-Flüssigreaktion im Gegenstrom der beiden Phasen durchzuführen, sind Gas-Flüssigreaktionen auch in Blasenreaktoren durchführbar. In diesen Reaktoren füllt die flüssige Phase als die kontinuierliche Phase den größten Teil des Reaktorvolumens z.B. in Form einer von oben gespeisten Flüssigkeitssäule aus und die diskontinuierliche Gasphase perlt von unten durch die Flüssigkeitssäule hindurch. Bei kritischen Mehrphasenreaktionen, die zur stöchiometrischen Umsetzung mit relativ hohen Gasmengen arbeiten müssen, bedingt dies unakzeptabel lange Verweilzeiten der Flüssigkeit im Blasensäulenreaktor. Wenn zudem wie bei der obigen Ozonierung ungesättigter Fettsäuren das Reaktionsprodukt explosiv ist, scheidet diese Art Reaktor auch aus Sicherheitsgründen aus.

Zudem tritt bei den Blasenreaktoren das Problem auf, daß die Gasblasen sich über die Länge des Reaktors zu immer größeren Gasblasen vereinigen und so der Reaktionsumsatz zum Reaktorkopf hin abnimmt. Um dem zu begegnen, ist es aus der CH 507 734 A bekannt, eine Mehrstufenblasensäule dadurch zu erzeugen, daß die Blasensäule durch feinporige Gassperren unterbrochen wird und auf diese Weise das Reaktorinnere mehrere hintereinander geschaltete Blasensäulen enthält. Ein Gaseinlaßventil am Reaktorboden wird während des Betriebs gemeinsam oder im Wechsel mit einem Gasauslaßventil am Reaktorkopf ein- und ausgeschaltet. Dasselbe gilt für die Flüssigkeitsventile am oberen und unteren Ende des Reaktors. Die aufsteigenden Gasblasen vereinigen sich unter den Gassperren zu einem Gaspolster, das durch periodisch abfolgende Druckstöße durch die darüber liegenden Gassperren gepreßt wird, wodurch die Gasphase neu dispergiert wird. Die Druckstöße des Gases von unten und der Flüssigkeit von oben, die auf den Säuleninhalt wirken, werden, abgesehen von einer Reihe alternativer Maßnahmen, durch alternierendes Öffnen und Schließen der beiden Steuerventile für die Gasphase und der beiden Steuerventile für die Flüssigphase erzeugt.

Der Erfindung liegt die Aufgabe zugrunde, ausgehend von den Merkmalen im Oberbegriff des Anspruchs 1 ein Verfahren zu schaffen, das eine verbesserte Durchführung von Mehrphasenreaktionen nach dem Gegenstromprinzip auch bei kritischen Phasenzusammensetzungen ermöglicht. Ferner soll eine Vorrichtung zur Durchführung des Verfahrens geschaffen werden. Diese Aufgabe wird durch den Gegenstand der unabhängigen Ansprüche 1 bzw. 11 gelöst. Vorteilhafte Weiterbildungen sind in den Unteransprüchen definiert.

Die Erfindung betrifft im Gegensatz zu batchweise arbeitenden Verfahren ein Verfahren zur Durchführung einer Mehrphasenreaktion in einem kontinuierlich betriebenen, nach dem Gegenstromprinzip arbeitenden Rohrreaktor. Dies bedeutet nicht, daß die Zufuhr einer oder beider Phasen nicht auch moduliert und im Bedarsffall kurzzeitig unterbrochen werden könnte.

So stellten die Erfinder überraschend fest, daß sie den kontinuierlich im Gegenstrom arbeitenden Rohrreaktor mit einer als Fließfilm abwärts strömenden flüssigen Phase durchaus fortgesetzt mit derart hohen Gasphasendrücken und folglich auch Gasphasenströmungsgeschwindigkeiten sowie Flüssigphasengeschwindigkeiten betreiben konnten, daß es bei einem Reaktor mit Einbauten ohne die erfindungsgemäße Pulsation der Gasphase bereits nach wenigen Minuten zu einem Flüssigphasenstau gekommen wäre. Allein durch eine wiederholte zeitweise Druckabsenkung an der Gaszufuhr gelingt es, einem Flüssigphasenstau und Fließfilmdickenzuwachs erfolgreich entgegenzuwirken. Dies kann alternativ oder auch zusätzlich durch eine Druckerhöhung an der Gasableitung aus dem Rohrreaktor bewirkt werden. Trotz der hohen Geschwindigkeiten von kontinuierlicher, pulsierender Gasphase und kontinuierlich zuführbarer Flüssigkeitsphase ist so im Reaktor mit und auch ohne Einbauten ein stabiler Reaktorbetrieb mit hervorragendem Reaktionsergebnis und Durchsätzen erzielbar, wie sie sonst nur bei Gleichstromreaktoren z.B. mit sehr viel größerem Querschnitt und längeren Reaktionszeiten erreicht werden. Offenbar kann durch das erfindungsgemäße Pulsieren der kontinuierlichen Gasphase der Flutpunkt heraufgesetzt werden.

In einem Reaktor ohne Staustellen hervorrufende Einbauten konnte durch dieselbe Maßnahme ein wiederholtes Anwachsen des Fließfilms der Flüssigphase auf der Rohrwand in den Bereich für die Reaktion nicht akzeptabler und sogar kritischer Werte bewältigt werden (bei denen es im Grenzfall zum Einbrechen des Fließfilms im Reaktorrohr kommt). Dabei stellt sich darüber hinaus der Vorteil ein, daß durch die wiederholte Zu- und Abnahme der Fließfilmdicke eine Vergrößerung der Fließfilmoberfläche und damit Reaktionsfläche über die Rohrlänge auftritt. Die Fließfilmoberfläche nimmt ein wellenförmiges Profil an, wobei die Flüssigphase im Fließfilm vorteilhaft in sich verschoben wird und so unterschiedliche Flüssigphasenbereiche im Filmprofil mit der Gasphase in Berührung kommen. Durch die stets erneute Erhöhung des Gasphasendrucks wird im übrigen auch eine Abnahme des Fließfilms auf zu geringe Werte verhindert.

Durch die zeitweise Druckabsenkung in der Gasphase von unten (bzw. Druckerhöhung von oben) wird die Gegenstrombewegung der Gasphase zeitweise unterbunden, so daß die Gasphase zumindest zum Stillstand kommt. Bevorzugt wird jedoch erfindungsgemäß die Strömungsrichtung der Gasphase zeitweise sogar umgekehrt. Hierdurch wird überraschender Weise der stabile, kontinuierliche Betrieb des Reaktors nicht gestört, sondern hingegen die Reaktionsumsetzung nachweislich gefördert. Ein Grund hierfür mag sein, daß die Gasphase durch ihre Hubbewegung über längere Kontaktzeiten und vergrößerte Phasenaustauschflächen mit der Flüssigphase in Reaktion kommen kann. Dieser positive Effekt der Steigerung des Reaktionsumsatzes ist hingegen nicht dadurch erzielbar, daß die Gaszufuhr durch ein Ventil lediglich zu- und abgeschaltet wird.

Ferner konnte eine weitere Steigerung des Umsatzes der Reaktion dadurch erzielt werden, daß der Gasphasendruck nicht nur wiederholt zeitweise abgesenkt wurde, sondern periodisch so erhöht und abgesenkt wurde, daß im Rohrreaktor durch den derart gepulsten Gasdruck eine Gasschwingung auftrat. Durch die erzeugte Gasschwingung mit einer zeitweisen Bewegung der Gasphase entgegen der an sich gewünschten Gegenstromrichtung wird, wie bereits ausgeführt, die Reaktionsumsetzung gefördert.

Die Flüssigphase wird zudem ebenfalls durch die durch den wiederholten, gegebenenfalls periodischen Gashub erzeugten Turbulenzen in vorteilhafter Weise durchmischt. Dies führt zu einer Erhöhung des Stoffumsatzpotentials pro Reaktionsvolumen. Darüber hinaus werden selbst bei feinmaschigsten Stukturen von der Flüssigkeit zugesetzte Bereiche durch die Gasschwingung wieder freigemacht. Daher können erfindungsgemäß im Gegenstromreaktor dicht gepackte feinmaschige Strukturen eingesetzt werden.

Ein besonderer Vorteil besteht darin, daß mit sehr hoher Gasströmungsgeschwindigkeit gearbeitet werden kann, was für stöchiometrische Verhältnisse erfordernde chemische Reaktionen wie die zweistufige oxidative Ozonolyse von ungesättigten Fettsäuren von entscheidendem Vorteil ist. Es kann wegen der verbesserten Umsetzungsrate auch bei hohem Mengendurchsatz mit sehr hohen Ozonkonzentrationen gearbeitet werden. Der Wasserzusatz kann ohne enge Begrenzung durch die übrigen Bestandteile der flüssigen Phase in weiten Grenzen gesteigert werden.

Selbst wenn man die dem im Gegenstrom betriebenen Rohrreaktor zugeführten Stoffströme so gering hält, daß es nicht zu einem Flüssigphasenstau käme, ist es durch die erfindungsgemäße Pulsierung der Gasphase möglich, den Reaktionsumsatz gegenüber der Nichtanwendung dieses Merkmals deutlich zu steigern und in den Genuß der aufgezeigten Vorteile wie dem Arbeiten mit hoher Ozonkonzentration usw. zu kommen. Im Leerrohrreaktor erhält man die erläuterte vorteilhafte Oberflächenvergrößerung und Schichtverlagerung des Fließfilms und im mit Einbauten usw. gefüllten Reaktor die hierfür bereits geschilderten Vorteile. Auch hier können somit im Vergleich zur klassisch durchgeführten Gegenstromreaktion ein deutlich höherer Stoffdurchsatz bei gegebener Reaktorgeometrie und eine wesentliche Vergrößerung der Grenzfläche zwischen Flüssigkeit und Gasphase und damit eine deutliche Erhöhung des Grenzflächenübertritts der gasförmigen Reaktionskomponente erreicht werden. Emulsionen innerhalb der flüssigen Phase bzw. während der Reaktion entstehende Emulsionen lassen sich wesentlich effektiver umsetzen als ohne Gasschwingung. Darüber hinaus sind auch bei dieser Art des erfindungsgemäßen Verfahrens die sonst ein erhebliches Problem darstellenden Totvolumina bezüglich des Stoffstromes in der Reaktionssäule vermeidbar, wie sie speziell bei Suspensionen von Nachteil sind. Einem Zerfall der Emulsionen wird ferner erfolgreich entgegengewirkt.

Die erfindungsgemäß angewandte Schwingung der Gasphase ist im übrigen auch vorteilhaft auf im Gleichstrom betriebene Reaktoren und im Kreuzstrom geschaltete Gleichstromreaktoren anwendbar. Spezielle Vorteile kann sie hier bei der Umsetzung von zur Sedimentation neigenden Suspensionen wie z.B. im Fall katalytischer Hydrierungen mit Ranay-Nickel als Katalysator und Wasserstoff als Gas erbringen.

Es ist erfindungsgemäß möglich, daß der Stoffstrom der flüssigen Phase im Gegenstromreaktor über den Zeitraum der Reaktion integriert bezüglich der durchfließenden Menge der Charakteristik einer im Gleichstrom geführten Reaktion entspricht, jedoch bezüglich der Phasentransferphänomene und dem Verlauf der chemischen Reaktion die Charakteristik einer im Gegenstrom geführten Reaktion aufweist.

Vorzugsweise werden erfindungsgemäß Flüssigphasenstaus vermieden. Auf jeden Fall wird der Druck der Gasphase zumindest immer dann zeitweise, wie in Anspruch 1 angegeben, in pulsierender Weise geändert, wenn ein Flüssigphasenstau oder ein nicht akzeptabler Fließfilmdickenzuwachs auftritt. Die zeitweise Druckänderung wird dann so eingestellt, daß die gestaute Flüssigphase durch eine resultierende relative Druckabnahme unterhalb der Staustelle abfließt oder die Fließfilmdicke durch eine resultierende Abnahme der Gasphasengeschwindigkeit auf einen gewünschten Wert abnimmt. Falls gewünscht, kann der Reaktor auf diese Weise kurzfristig sogar lokale Staustellen aufweisen, ohne daß sein Betrieb diskontinuierlich wird. Mit anderen Worten kann das bekannte Phänomen des Flutens in Gas-Flüssig-Füllkörperreaktoren mit kontinuierlicher Gasphase und frei fallendem Flüssigkeitsfilm erfindungsgemäß bewältigt werden. Das Strömungsverhalten der beiden Phasen kann angenähert als Pfropfenströmung angesehen werden.

Die periodischen Schwingungen des im Gegenstrom geführten Gases induzieren auch in der flüssigen Phase und gegenüber dem Gas selbst eine wesentlich höhere Vermischung als bei gleicher Gegenstromprozeßführung ohne periodische Schwingung. Die Einführung einer periodischen Schwingung wird bisher zwar auch schon bei Flüssig-Flüssig-Gegenstromperkolatoren genutzt. Im Unterschied zu Gas-Flüssig-Mehrphasenreaktionen schwingen hier jedoch zwangsläufig beide Phasen im Gleichtakt und die Strömungsverhältnisse sind prinzipiell nicht vergleichbar.

Im Vergleich zu den Kreuzstromanordnungen mit zumindest zwei im Kreuzstrom geschalteten Gleichstromreaktoren kann der nur eine erfindungsgemäße Gegenstrom-Rohrreaktor verkürzt sein und erbringt dennoch einen besseren Umsatz. Im Vergleich zu herkömmlich betriebenen Gegenstromrohrreaktoren kann der erfindungsgemäße Reaktor bei gleichem Durchsatz und Stoffumsatz erheblich schmaler ausgebildet werden.

Zur Durchführung der erfindungsgemäßen im Gegenstrom geführten Gasflüssigreaktion werden bevorzugt zylindrische Röhrenreaktoren eingesetzt, weil auf deren Geometrie das Erfindungsprinzip auf einfache Weise angewandt und optimiert werden kann. Das Erfindungsprinzip kann sowohl auf Röhrenreaktoren ohne den Strömungswiderstand erhöhende Einbauten (Dünnfilm-/Glattrohr-Röhrenreaktoren), als auch auf Röhrenreaktoren mit Einbauten angewandt werden, die die Reaktionsgrenzflächen und damit auch den Strömungswiderstand erhöhen und somit die erfindungsgemäßen Gasschwingungen dämpfen. Hierbei können sowohl einheitliche gepackte Säulen als auch bevorzugt variabel geschichtete, unterschiedliche Strömungswiderstände und unterschiedliche Strömungen der Phasen induzierende Zonen in den Einbauten vorhanden sein. Gerade bei letzteren kommen die Vorteile des erfmdungsgemäßen Gegenstromprinzips besonders zur Wirkung.

Sämtliche dem Fachmann bekannten Eigenschaften wie katalytische Aktivität oder Polarität der Oberflächen, Elektrostatik, Transportphänomene, elektronische Effekte, magnetische Effekte, Feldeffekte der verwendeten Oberflächen, die bei den Einbauten zur Vergrößerung der Oberflächen zum Einsatz kommen, sind im erfindungsgemäßen Verfahren anwendbar. Diese Einbauten können beispielsweise massiv sein oder als Coatings aufgebracht sein.

Die Amplitude und Frequenz der wiederholten Druckänderungen der Amplitude sowie der induzierten Druckschwingungen kann der Fachmann seiner jeweiligen Reaktorgeometrie und den Stoffeigenschaften (insbesondere den Viskositäten) seines Systems anpassen. Für die Charakteristik der Schwingung kommen symmetrische oder asymmetrische, sinusiodale, Dreieck-, Sägezahn-, Rechteck-, Treppen-, kombinierte und/oder überlagerte Schwingungsmuster mit mehreren Frequenzen und Charakteristiken, überlagerte Schwingungen beispielsweise zur Erzeugung von gezieltem Flüssigfilmabriss in Frage. Es kann ferner eine Amplitudenmodulation der vorgegebenen Druckschwingung mit gegenüber der Frequenz der Druckschwingung höherer Frequenz erzeugt werden.

Die in der erfindungsgemäßen Vorrichtung zu ergreifenden Maßnahmen zur Umsetzung des erfindungsgemäßen Verfahrens sind gegenüber den herkömmlichen Gegenstromreaktoren mit geringem technischen Zusatzaufwand realisierbar. Es reicht prinzipiell eine einzige Druckänderungseinrichtung in Form eines Kolbens oder einer Membran im Bereich der Gasphasenzufuhr am unteren Reaktorende aus, mit der die zeitweisen Druckabsenkungen erzielt werden. Als vorteilhaft hat sich demgegenüber erwiesen, die Druckabsenkung im unteren Reaktorbereich bzw. Druckerhöhung am oberen Reaktorbereich mit Hilfe einer druckgesteuerten, schwingenden Flüssigkeitssäule hervorzurufen.

Auch könnten zusätzliche Gasdruckänderungseinrichtungen längs des Rohrreaktors vorgesehen sein, die erfindungsgemäß gezielt eingesetzt werden. Eine gestaute Flüssigphasensäule kann auch mit Hilfe eines Bypasses mit Ventil abgelassen werden, wobei beim Öffnen des Ventils ein Druckausgleich der Gasphase ober- und unterhalb der Staustelle herbeigeführt wird und die Flüssigkeit schnell abfließt. Schließlich ist es alternativ möglich, den Druck von oben zeitweise zu erhöhen, um Flüssigkeitsstaus und Filmdickenzuwächsen entgegenzuwirken.

Im folgenden wird das erfindungsgemäße Verfahrensprinzip am Beispiel der Umsetzung von ungesättigten nativen Fettsäuren zu Ozoniden exemplarisch erläutert. Dieser Fall steht für Gas-Flüssig-Gegenstromreaktionen, bei denen ein Trägergas eine gasförmige Reaktante enthält und mit einer in Flüssigkeit gelösten Reaktante in Gegenwart einer zweiten als Hilfsstoff eingesetzten, nicht mischbaren Flüssigkeit zur Umsetzung gebracht werden soll.

Es ist jedoch auch auf andere chemische Reaktionen und insbesondere für die bezeichneten kritischen gemischten Phasen mit gleichem Vorteil anwendbar. Als Mehrphasenreaktionen kommen auch Trennoperationen in Frage wie die Entfernung von Ammoniak oder SO₂ aus Rauchgas als Gasphase mit Wasser oder einer Säure als flüssiger Phase.

Ungesättigte native Fettsäuren (z.B. Ölsäure, Erucasäure, ... etc.) lassen sich mit Ozon zu den entsprechenden Ozoniden umsetzen. Das Ozon wird bei dieser Reaktion in Siemens- Generatoren aus Sauerstoff oder Luft erzeugt und als Gasgemisch mit den ungesättigten Fettsäuren zur Reaktion gebracht. Die Konzentration des Ozons liegt dabei je nach Prozeßführung bei wenigen Prozent bis maximal 15%.

Die zur Reaktion zu bringenden flüssigen (z.B. Ölsäure) oder festen (z.B. Erucasäure), ungesättigten Fettsäuren werden in einem an der Reaktion nicht teilnehmenden Lösemittel (z.B. Pelargonsäure) gelöst und mit Wasser als Reaktionswärme aufnehmendem und abführendem Medium vermischt. Dieser flüssigen Phase strömt im Gegenstrom das Gasgemisch aus Ozon und Sauerstoff bzw. Luft im Röhrenreaktor entgegen. Das Verhältnis von Ozon zu ungesättigter Fettsäure wird dabei so gewählt, daß sowohl eine stöchiometrische Umsetzung zwischen Ozon und Doppelbindung der Fettsäure stattfinden kann, als auch zwangsweise die von Temperatur, Luft, Verweilzeit und anderen physikalisch-chemischen Parametern (z.B. katalytische Aktivität oder Polarität der freien Oberflächen,... etc.) abhängige Zerfallsrate des Ozons kompensiert wird ("O₃-Überschuß").

Die zugeführte Wassermenge, die Temperatur des zugeführten Wassers sowie der Volumenstrom des im Gegenstrom zugeführten Gases und dessen Temperatur werden so gewählt, daß die Temperatur des Reaktors im gewünschten Temperaturbereich konstant bleibt. Das Wasser nimmt zum einen aufgrund seiner Wärmekapazität einen Teil der Wärme auf und führt zum anderen durch das im Gegenstrom fließende Gas, welches beim Eintritt in die Säule zunächst kühl und trocken ist, die durch Verdampfung des Wassers zur Wasserdampfsättigung des Gases nötige Energie ab.

Von der bei dieser Reaktion genutzten Eigenschaft des Hilfsstoffes Wasser, die Temperatur des Reaktors und der Reaktion thermodynamisch kontrolliert regeln zu können, wird in der Produktionstechnik seit langem bereits Gebrauch gemacht. Jedoch sind bei der Durchführung einer Gegenstromreaktion bisher den veränderbaren Parametern enge Grenzen gesetzt. Mit zunehmender Strömungsgeschwindigkeit des im Gegenstrom fließenden Gases (Luft bzw. Sauerstoff mit Ozon) wie auch durch dichtere Packung der Reaktorsäulen zur Verbesserung des Phasenaustausches zwischen dem Gas und der flüssigen Phase wird die Strömungsgeschwindigkeit der flüssigen Phase sehr bald derart reduziert, daß diese sich im Reaktionsrohr staut bzw. ihre Fließrichtung umkehrt.

Läßt man nun das Ozon-Sauerstoff-Gemisch erfindungsgemäß im Gegenstrom pulsieren, so wird zwar auch hier die flüssige Phase durch das entgegen strömende Gas abgebremst und im Durchfluß vermindert. Bei über die Zeit gesehen gleicher Gasmenge (Fracht in Gasgewicht pro Zeiteinheit) ist jedoch diese durchflußmindernde Wirkung deutlich niedriger als bei gleichmäßigem Gasstrom.

Die wiederholten zeitweisen oder periodischen Druckänderungen in der Gasphase und damit die Änderungen der Strömungsgeschwindigkeit des Gases induzieren bei der flüssigen Phase einen Auf- und Abbau der Dicke des Fließfilmes im Reaktorrohr. Ohne die Fließrichtung umzukehren, ist der durch den Gasgegenstrom induzierte Dickenzuwachs des Fließfilmes auf einen maximalen Wert beschränkt, der sich aus dem Zufluß an Flüssigkeit in den Reaktor ergibt. Die Geschwindigkeit, mit der der aufgebaute Fließfilm abnehmen kann, hängt hauptsächlich von der inneren Reibung der flüssigen Phase (Viskosität) sowie der Reibungskraft zwischen dem Gas und der flüssigen Phase ab. Bei wechselnder Geschwindigkeit des entgegenströmenden Gasgegenstromes lassen sich die ablaufenden Prozesse in zwei Zeit-Phasen einteilen: In der einen Zeit-Phase baut sich bei erhöhter Gegenstromgeschwindigkeit des Gases infolge des Reibungswiderstandes mit der Oberfläche der flüssigen Phase, dem Zustrom der flüssigen Phase entsprechend, langsam eine sich mehr und mehr erhöhende Filmdicke auf. Diese kann dann in der anderen Zeit-Phase bei verminderter Gegenstromgeschwindigkeit des Gases schnell in Fließrichtung der flüssigen Phase abgebaut werden kann. Dabei verbleibt resultierend die in Fließrichtung der flüssigen Phase wirkende Förderkraft.

Im folgenden wird die Erfindung anhand der Zeichnungen näher erläutert. Es zeigen
FIGUR 1 eine schematische Darstellung einer Laboranlage zum Testen des erfindungsgemäßen Verfahrens, und
FIGUR 2 eine größere Anlage mit modifizierter Druckänderungseinrichtung, wobei FIGUR 2a einen Ausschnitt mit einem schräg angesetzten Stutzen für die Ozonzufuhr zeigt,
FIGUR 3 ein Ausführungsbeispiel für das Gerät zur Erzeugung von Druckänderungen aus FIGUR 1 oder 2 und
FIGUR 4 ein weiteres Ausführungsbeispiel für das Gerät zur Erzeugung von Druckänderungen aus FIGUR 1 oder 2.

### Umsetzung von ungesättigten nativen Fettsäuren zu Ozoniden

Zur Umsetzung von ungesättigten nativen Fettsäuren zu Ozoniden wurde eine Laboranlage bestehend aus folgenden Elementen aufgebaut.

Eine Reaktorsäule 1 (Typ I) einer Länge von 1,20 m und mit einem Innendurchmesser von nur 0,040m aus Glasbauteilen der Firma Büchi AG/ Schweiz, ist mit handelsüblichen Füllkörpern F der Firma Vereinigte Füllkörper Fabriken gefüllt, welche durch eine 2mm Teflonplatte T mit fünf 5mm-Bohrungen abgeteilt sind.

Am Kopf der Säule sind zwei nicht näher bezeichnete Stutzen zu Zufuhr von Flüssigkeit (E, P,W) und zum Gasaustrag (O₂) angebracht. Unterhalb der Packung befindet sich ein T-Stück 2 aus Glas, an welchem seitlich ein Gaseinlaß zur Gasquelle (O₃/O₂) über ein Rückschlagventil R angebracht ist. Nach unten hin ist an diesem T-Stück 2 ein nicht dargestelltes Ventil zum kontrollierten Ablassen der Flüssigkeit montiert.

Die Flüssigkeitszufuhr erfolgt über eine nicht dargestellte Dosierpumpe der Firma ProMinent/Heidelberg, die die Flüssigkeit aus einem temperierbaren Vorratsbehälter zieht, der diese unter stetigem Rühren homogenisiert bzw. homogen erhält.

Die Gaszufuhr besteht aus einem ebenfalls nicht dargestellten Siemensgenerator zur Ozonerzeugung der Firma Ozonia/Fischer Technology GmbH, der hier mit reinem Sauerstoff betrieben wurde. Bei einem Gasdurchfluß von 400l/h und einer eingestellten Generator-Leistung von 500 Watt entsteht ein Ozon/Sauerstoffgemisch mit ca. 11 Vol.-% Ozon. Dabei wird ein Gasgemisch mit ca. 54g Ozon je Stunde erzeugt. Das Ozon/Sauerstoff-Gemisch wird über ein Rückschlagventil von unten in die Reaktorsäule F eingeführt. Zwischen dem Rückschlagventil R und Reaktor ist über die T-Verzweigung 2 eine Gerät zur Erzeugung von Druckänderungen im Gasstrom 3 (GERDA) angeschlossen. Im einfachsten Fall ist dies als Ausdehnungsgefäß realisierbar, dessen Volumen mechanisch variiert werden kann. Im Ausführungsbeispiel ist nach anfänglichen Versuchen mit einem solchen Gefäß ein Kolben eingebaut worden.

Ein flüssiges Gemisch aus Erucasäure (E), Pelargonsäure (P) und Wasser (W) der Zusammensetzung:

| | | |
|---|---|---|
| Erucasäure (94%), | C₂₂H₄₂O₂ | 12,5 Gew.-% |
| Pelargonsäure, | C₉H₁₈O₂ | 12,5 Gew.-% |
| Wasser, | H₂O | 75,0 Gew.-% |

wird unter stetigem Rühren im nicht dargestellten Mischgefäß vorgelegt.

Alternativ wurde auch mit der Zusammensetzung Ölsäure (92%), C₁₈H₃₄O₂, 10 Gew.-%, Pelargonsäure, C₉H₁₈O₂, 10 Gew.-%, und Wasser 80 Gew.-% gearbeitet.

Das Flüssigkeitsgemisch wird mittels der Dosierpumpe von oben auf die gepackte Reaktorsäule (des Typs I) gegeben. Im Gegenstrom wird unterhalb der Packung, wie dargestellt, ein Ozon/Sauerstoffgemisch eingespeist. Dabei reagiert das Ozon mit der in Pelargonsäure gelösten Erucasäure unter Wärmeabgabe zu einen Erucasäureozonid. Das Ozon reagiert mit Wasser und der Pelargonsäure nicht oder nur in verschwindend geringem Maße. Jedoch zerfällt ein Teil des Ozons temperaturabhängig (ca. 5 bis 20%) zwischen Erzeugung und Reaktoraustritt.

Die Stoffströme der gelösten Erucasäure und des Ozons und die der jeweiligen Begleitstoffe (Pelargonsäure, Wasser, Sauerstoff) werden so eingestellt, daß ein stöchiometrischer Umsatz von Erucasäure und Ozon zu Erucasäureozonid stattfinden kann. Der Anteil des zerfallenden Ozons wird im Überschuß eingesetzt und somit der für die Reaktion nicht zur Verfügung stehende Ozonanteil kompensiert.

Zu Beginn des Betriebes bleibt das Gerät 3 ausgeschaltet. Bei einer Förderleistung von 2600 g/h Flüssigkeitsgemisch (E,P,W) und einem Volumenstrom von 4001/h Gasgemisch (Ozon/Sauerstoff) im Gegenstrom baut sich nach kurzer Zeit (ca. 5 Minuten), nachdem die Ozonanlagerungsreaktion in Gang gekommen ist, am Tefloneinsatz T eine Ablaufsperre aus dem zugeführten Flüssigkeitsgemisch auf. Deren Pegel steigt immer weiter an und führt zu einem kritischen Zustand, bei dem der Betrieb dieses Reaktors unmöglich wird. Der Reaktor füllt sich mit Flüssigkeit, die nicht ablaufen kann, da mehr Flüssigkeit von oben zugeführt wird, als durch die Teflonscheibe abfließen kann. Dieses Abflußproblem begrenzt den Durchsatz für diese Reaktorgröße und Bauart bei herkömmlichem Betrieb. Spätestens, sobald sich aufgrund der hohen Stoffströme eine solche flüssige Ablaufsperre aufbaut und sich die Möglichkeit des Auftretens eines kritischen Zustandes abzeichnet, wird das Gerät 3 eingeschaltet. Der Reaktor läßt nun einen höheren Produktdurchfluß zu. Durch gepulste Druckänderungen und somit Änderungen der Strömungsgeschwindigkeit des Gases baut sich die flüssige Ablaufsperre ab und ermöglicht so einen Betrieb dieses Reaktors mit den genannten hohen Stoffeinsätzen. Der Stoffumsatz zum Ozonid war hierbei vollständig (>99%).

Selbst beim Herunterfahren der Flüssigkeits-Dosierpumpe auf niedrigste Leistung von weniger als 1000 g/h und entsprechender Reduzierung des Gasstromes auf weniger als 200l/h konnte noch kein kontinuierlicher Reaktorbetrieb erreicht werden. Nach wie vor baute sich eine Flüssigkeitssperre auf. Eine Probe der Reaktionslösung am Ausgang zeigte zudem keine vollständige Umsetzung. Erst bei drastischer Absenkung auf noch geringere Werte (300g/h Flüssigkeit und 50 l/h Gas) sowohl für das Gas als auch die Flüssigkeit wurde ein längerer Betrieb ohne Stauwirkung, allerdings mit entsprechend geringem Stoffumsatz und auch unvollständigerer Umsetzung möglich.

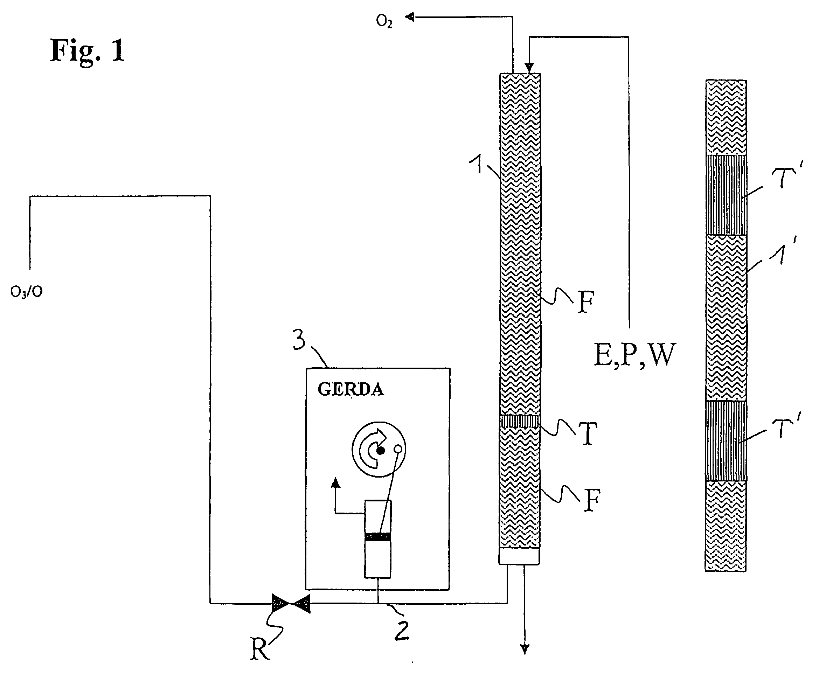

Neben dem Reaktor 1 Typ I wurde z.B. noch ein im rechten Bereich der Figur 1 skizzierter Reaktor 1' (Typ II) getestet, in dem zwei dickere Teflonscheiben T zwischen den Füllkörpern angeordnet waren. Schließlich wurde das Reaktorrohr auch noch durch ein etwas längeres ausgetauscht und mit bis zu fünf Scheiben T ausgestattet und zwischen diesen Scheiben mit verschiedenen Füllkörpersäulen gefüllt - und zwar abwechselnd mit sehr feinmaschigen Füllkörperpackungen in Form von Drahtgewebewickeln und gröberen Aufschüttungen statistisch verteilter Einzelfüllkörper, die durch die Scheiben T gehalten wurden.

Der Druck und die Geschwindigkeit der Gasphase der verschieden gefüllten Reaktoren wurden auf unterschiedlichste Weise sowohl lediglich zeitweise und wiederholt bei hohen Stoffströmen abgesenkt als auch so periodisch erhöht und erniedrigt, daß sich eine spürbare Schwingung im durchsichtigen Reaktionsrohr einstellte. So konnte der Reaktor erfolgreich bei den genannten hohen Stoffströmen kontinuierlich betrieben werden, wenn zumindest bei Einsetzen eines Flüssigphasenstaus der Gasdruck zeitweise immer so abgesenkt wurde, daß die gestaute Flüssigphasensäule von maximal wenigen cm Höhe abgelaufen war.

Diese Betriebsart läßt sich automatisieren, indem ein Flüssigphasenstau erfaßt wird und durch zeitweisen Druckabbau kompensiert wird, bevor der Reaktor wieder auf den hohen Gasdruck gebracht wird. Bei dem dargestellten vollständig mit Einbauten gefüllten Reaktionsrohr tritt ein Stau zu verschiedenen Zeitpunkten an unterschiedlichen Stellen im Reaktorrohr auf und kann so durch die Ausbreitung der Druckänderung über die Säule an einer Stelle beseitigt und bei einer anderen verhindert werden. Bei hohen Stoffströmen ist die Häufigkeit der Staubildung bereits so hoch, daß Druckänderungen ohnehin im Turnus von einigen Sekunden erforderlich sind, so daß selbst bei nicht im strengen Sinne periodischer Druckänderung ein Pulsieren der Gasphase auftritt. Es wurde bei hohen Stoffströmen mit einer Periode zwischen etwa 0,5 und 5 s gearbeitet.

Die Scheiben T bzw. T zwischen den verschiedenen Packungen in der Säule haben mit 5 mm Durchmesser so große Löcher, daß sie die kontinuierliche Gasphase nicht unterbrechen. Mit den Scheiben konnte einer Kanalbildung der Flüssigkeitsphase in den verschiedenen Packungen durch Umverteilung der Flüssigkeitsströmung entgegengewirkt werden. Zusätzlich zu den Packungen und Aufschüttungen stellen die Scheiben T, T zwar zusätzliche Staustellen für die Flüssigkeit dar. Flüssigkeitsstauungen an den Scheiben können jedoch erfindungsgemäß vermieden bzw. bewältigt werden.

Durch Kompression und Entspannung eines nicht dargestellten Druckgefäßes wurden ferner in der Reaktorsäule zeitweise oder periodische Druckerhöhungen und -absenkungen und damit Druckschwingungen erzeugt. Durch diese bevorzugt periodisch angewandten Druckhübe konnte die Reaktion weiter verbessert werden. Diese Maßnahme brachte auch dann einen deutlichen Erfolg hinsichtlich der chemischen Stoffumsetzung, wenn die Stoffströme auf die besagten niedrigen Werte gesenkt wurden und auch ohne Druckschwingung praktisch kein Flüssigstau auftrat. In der Regel wird man sich allerdings nicht freiwillig in der Höhe der Stoffströme beschränken, die gerade durch die Erfindung deutlich heraufgesetzt werden können und natürlich die Grundlage für eine erhebliche Stoffumsatzsteigerung bei gleichbleibender Reaktorgeometrie darstellen, vorausgesetzt, daß es gelingt, die hohen Stoffströme auch zur Reaktion zu bringen, was nachweislich ebenfalls durch die Erfindung gefördert wird.

Die Amplitude des erzeugten Gashubs erscheint im übrigen nicht kritisch, zumal die Einbauten stark dämpfend auf beide Phasen wirken. Der Hub darf natürlich nicht so hoch sein, daß die flüssige Phase zu weit nach oben gedrückt wird. Da dies selbstverständlich von zahlreichen Faktoren und nicht nur der Amplitude der vorgegebenen Druckschwingung abhängt, kann hier kein allgemein gültiger Grenzwert angegeben werden. Es erscheint allerdings vernünftig, die tatsächlich in der Reaktorsäule induzierten Druckhübe auf etwa ein Drittel deren Länge oder besser des Reaktorvolumens zu begrenzen.

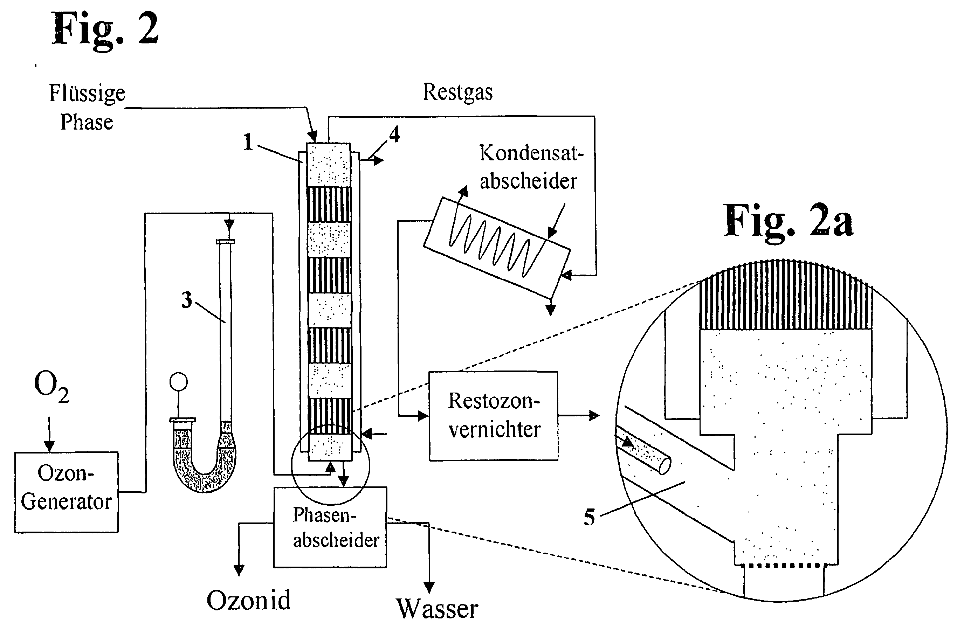

Auf Grund der Versuche mit der Laboranlage der Figur 1 wurde eine größere Anlage gemäß Figur 2 mit 2,20 m Länge und einem Reaktorinnendurchmesser von 100 mm gebaut. Trotz der beachtlichen Länge und vollständigen Bepackung des Reaktors mit Füllkörpern konnte eine Fortpflanzung der zeitweisen Druckabsenkung der Gasphase an der Gaszufuhr im gesamten Rohr beobachtet werden. Dies ist um so erstaunlicher, als daß, wie auch beim Reaktor der Figur 1, die Gasströmung im Durchfluß erfolgt und das Gasgemisch am Kopf des Reaktors in eine Restgasableitung abgelassen wird, wobei es frei aus dem Reaktor in die Restgasableitung ausströmt.

Der Reaktor der Figur 2 enthält vier in der Zeichnung durch senkrechte Schraffur angedeutete 300 mm lange Drahtgewebewickel als Füllkörper, auf denen jeweils in der Zeichnung nicht dargestellte Teflonscheiben mit dreißig bis vierzig 6 mm-Bohrungen liegen. Zwischen den Drahtgewebewickeln sind kommerzielle Füllkörper Interpak 10 der Vereinigten-Füllkörper-Werke jeweils in 200 mm Höhe aufgeschichtet. Das Restgas wird einem Kondensatabscheider (DN70 der Firma BÜCHI) getrocknet und anschließend einem Restozonvemichter COD 10 der Firma WEDECO, Herford, zugeführt. Die aus dem Reaktor austretende flüssige Phase wird in einem Phasenabscheider in Ozonid und Wasser getrennt. Ein Ozongenerator (SOM7 der Firma WEDECO, Herford) versorgt den unteren Bereich des Reaktors mit Ozon, wobei die Zufuhr über einen schräg angesetzten Stutzen 5 erfolgt, der in den bereits mit Füllkörpern bepackten Bereich des Reaktors mündet. Durch diese Konstruktion ist die Sicherheit erhöht, da der Abzug der flüssigen Phase von der Ozonzufuhr getrennt ist.

Der Reaktor ist mit einem temperierbaren Wassermantel 4 umgeben, mit dem eine Temperatur von etwa 35 °C eingestellt wird, um die Reaktion zu fördern.

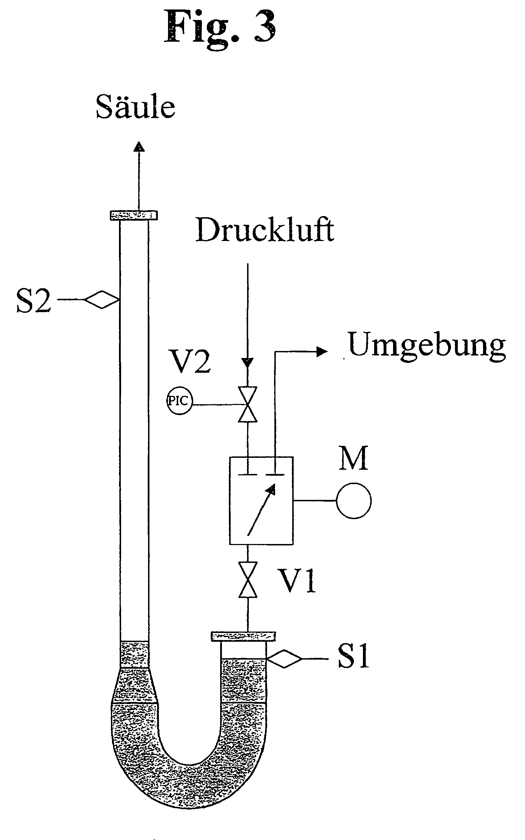

Das Gerät 3 zur Erzeugung von Druckänderungen besteht in diesem Ausführungsbeispiel aus einer kommunizierenden Röhre gemäß Figur 3, in der eine Druckpulsation durch die Schwingung einer Flüssigkeitssäule erzeugt wird. Der U-rohrfömige Glasbehälter dieses Geräts 3 ist teilweise mit Wasser gefüllt und kommuniziert am obere Ende des längeren Schenkels mit der Ozonleitung. An beiden Schenkeln ist je ein Sensor S1, S2 zur Erfassung des jeweiligen Flüssigkeitspegels an der Sensorposition vorgesehen. Durch den Sensor S1 wird ein 3/2 Wege-Magnetventil M zur Druckluft geschaltet, die über ein Ventil V2 zugeführt wird. Das Ventil V2 ist regelbar und ermöglicht eine Einstellung der Geschwindigkeit des Druckluftstromes zur Bewegung der Wassersäule von S1 nach S2. Zwischen dem Magnetventil M und dem Gasraum im kurzen rechten Schenkel des U-Rohrs ist ein Ventil V1 vorgesehen, das als Absperr- und Sicherheitsventil dient. In der in Figur 3 gezeigten Stellung wird dem Gasraum im rechten Schenkel des U-Rohrs über die Ventile V2, M und V1 Druckluft zugeführt. Erreicht der Wasserpegel den Sensor S2, wird die Druckluftzufuhr abgeschaltet und der Gasraum im rechten Schenkel des U-Rohrs zur Umgebung hin geöffnet. Die Säule schwingt daraufhin in die Ausgangsstellung zurück und verursacht im unteren Bereich des Reaktors einen entsprechenden Druckabfall in der ansonsten mit gleichbleibendem Durchsatz zugeführten Gasphase. Sobald der Sensor S1 anspricht, erfolgt erneut der Druckaufbau.

In einem Ausführungsbeispiel wurde ein Differenzvolumen von 0,8 bis 0,9 als Hubvolumen zur Erzeugung der Gaspulsation in der Gasphase im Reaktor bewegt. Es wurden 40 Hübe pro Minute (entsprechend einer Hubfrequenz von etwa 0,67 Hz) erzeugt, wobei die Druckaufbauperiode etwa 1s und die vergleichsweise kurze Saughub-Periode etwa 0,4 s betrugen. Somit wurden pro Hub etwa 6% des lichten Innenvolumens vom Reaktor als Hubvolumen in der schwingenden Flüssigkeitssäule bewegt. Hierdurch konnte bei dem speziellen Reaktor, seiner dichten Bepackung und dem Reaktionsgemisch der flüssigen Phase sowie einem relativ weiten Bereich von Durchsätzen an Gas- und flüssiger Phase als Parameter ein stabiler Betrieb ohne Stauungen im Reaktor gewährleistet werden. Bei 3 m³/h Durchsatz Gasphase konnte der Durchsatz der flüssigen Phase auf 50 l/h gesteigert werden, bei 4,5 m³/h Gasphase auf noch 20 l/h. Wurde hingegen ohne das Gerät 3 gearbeitet, so kam es bereits bei 5 l/h flüssiger Phase und 1 m³/h Gasphase zu Stauungen im Flüssigfilm und bei 101/h flüssiger Phase und 1 m³/h Gasphase lief der Reaktor in kurzer Zeit voll.

In Anbetracht der Tatsache, daß die oben genannten baulichen und Betriebsparameter des Reaktors sich gegenseitig beeinflussen, können keine allgemein gültigen Bereiche für das optimale Hubvolumen und die anderen Parameter angegeben werden. Der Fachmann kann jedoch mit wenigen Versuchen feststellen, bei welchem Hubtakt und Hubvolumen er bei seinem speziellen Reaktor für die gewünschte Reaktionsmischung die optimalen Durchsätze für die flüssige und feste Phase erreicht. Dazu beobachtet er, bei welchen Parametern der Reaktor jeweils zu fluten beginnt.

Die schwingende Flüssigkeitssäule mit der relativ kurzen Saughubperiode und dem mit geringem apparativen Aufwand möglichen großen Hubvolumen hat sich für die Erfindung bewährt.

Grundsätzlich ist es von Vorteil, die Saughubperioden im Vergleich zu den damit abwechselnden Druckaufbauperioden kürzer einzustellen und auf diese Weise zu erzielen, daß die Gasphasenströmungsrichtung am Gaseinlaß des Reaktors im Saugintervall kurzzeitig umgekehrt wird und hierdurch der Ablaufsperren freie stabile Betrieb gefördert wird. Es empfiehlt sich zudem, große Saughubvoluminazu bewegen. In den Ausführungsbeispielen lagen diese bei zumindest einigen Prozent bezogen auf das lichte Innenvolumen des Reaktors. Wie bereits erwähnt sind hingegen zu große Volumina wiederum zu vermeiden. Dem Fachmann dürfte klar sein, daß der jeweilige optimale Wert von den oben erwähnten Parametern abhängt und jeweils zu ermitteln ist. Im übrigen kann man diese Maßgabe der relative kurzen Druckabsenkungsperioden im Vergleich zu den alternierenden Druckaufbauperioden auch auf die alternative Druckerhöhung an der Gasableitung aus dem Reaktor übertragen, wobei hier der Druck der Gasphase jeweils in kürzeren Perioden erhöht als wieder abgesenkt wird.

Alternative Druckänderungseinrichtungen zum Erzeugen der gewünschten Saughubvolumina sind Einrichtungen mit elektronisch regelbaren Kolben, Faltenbälgen und/oder Pumpenaggregaten.

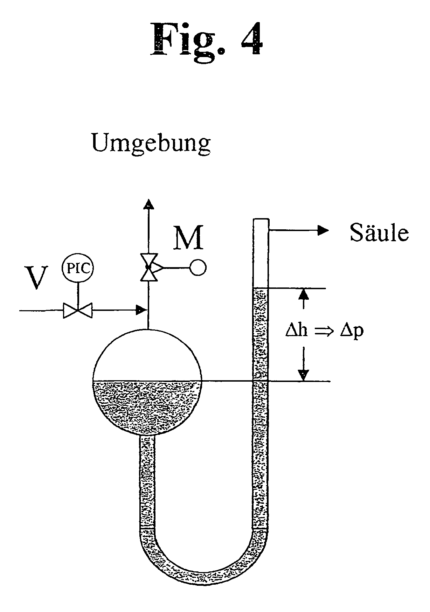

Eine modifizierte Ausführung der schwingenden Flüssigkeitssäule ist in Figur 4 gezeigt. Sie umfaßt ein Vorratsgefäß für eine Flüssigkeit (wiederum vorzugsweise Wasser), das mit einem U-Rohr verbunden ist, welches am längeren rechten Schenkel mit der Gaszufuhr des Reaktors verbunden ist. Am Regelventil V wird ein beliebiger Vordruck aus einer nicht dargestellten Druckluftquelle eingestellt. Durch diesen Druck wird die Auslenkung der Wassersäule Delta h vorgegeben. Wird das Magnetventil M in vorgegebenen Intervallen unterschiedlich lang geöffnet, so wird die Flüssigkeitssäule in Schwingungen variabler Amplitude, Frequenz und Schwingungsform versetzt, wobei sich entsprechende Druckpulsationen in der Gaszufuhr in den Reaktor einstellen.

## Patentansprüche

1. Verfahren zur Durchführung einer Mehrphasenreaktion in einem nach dem Gegenstromprinzip arbeitenden Rohrreaktor, der ohne oder mit die Reaktionsgrenzflächen vergrößernden Einbauten vorgesehen ist und in dem Komponenten einer flüssigen, im Rohrreaktor als Fließfilm abwärts strömenden Phase und Komponenten einer im Rohrreaktor aufwärts strömenden kontinuierlichen Gasphase zum Stoffaustausch bzw. zur Reaktion gebracht werden,
**dadurch gekennzeichnet,**
**daß** die Gasphase durch wiederholte zeitweise Druckabsenkung an der Gaszufuhr in den Rohrreaktor und/oder wiederholte zeitweise Druckerhöhung an der Gasableitung aus dem Rohrreaktor derart gepulst wird, daß einem Fließfilmdickenzuwachs und einem Flüssigphasenstau entgegengewirkt wird.

2. Verfahren nach Anspruch 1,
**dadurch gekennzeichnet,**
**daß** die Reaktordurchsätze der flüssigen und gasförmigen Phase auf so hohe Werte vorgegeben werden, bei denen es ohne die Gasphasenpulsation im Rohrreaktorinneren an den Einbauten zu einem Flüssigphasenstau käme oder bei denen in einem Rohrreaktor ohne Staustellen hervorrufende Einbauten die Fließfilmdicke der flüssigen Phase auf nicht mehr akzeptable Werte anstiege.

3. Verfahren nach Anspruch 1 oder 2,
**dadurch gekennzeichnet,**
**daß** der Druck zumindest immer dann zeitweise geändert wird, wenn ein Flüssigphasenstau oder ein nicht akzeptabler Fließfilmdickenzuwachs auftritt, und die zeitweise Druckänderung so eingestellt wird, daß die gestaute Flüssigphase durch eine resultierende relative Druckabnahme unterhalb der Staustelle abfließt oder die Fließfilmdicke durch eine resultierende Abnahme der Gasphasengeschwindigkeit auf einen gewünschten Wert abnimmt.

4. Verfahren nach einem der vorhergehenden Ansprüche,
**dadurch gekennzeichnet,**
**daß** die Gasphase so gepulst wird, daß die Aufwärtsbewegung der Gasphase zeitweise unterbunden wird und dabei bevorzugt die Bewegungsrichtung der Gasphase umgekehrt wird, so daß die Gasphase sich zeitweise abwärts bewegt .

5. Verfahren nach einem der vorhergehenden Ansprüche,
**dadurch gekennzeichnet,**
**daß** der Druck der Gasphase, vorzugsweise an der Gaszufuhr in den Rohrreaktor, periodisch so gepulst wird, daß im Rohrreaktor eine Druckschwingung der Gasphase auftritt.

6. Verfahren nach Anspruch 5,
**dadurch gekennzeichnet,**
**daß** die Periodenlänge und Amplitude der vorgegebenen periodischen Druckänderung wahlweise fest oder variabel und beispielsweise entsprechend einer Sinusschwingung, Sägezahnschwingung oder Rechteckschwingung vorgegeben werden.

7. Verfahren nach einem der vorhergehenden Ansprüche,
**dadurch gekennzeichnet,**
**daß** die zeitweisen Druckabsenkungen in einer kürzeren Zeitperiode erfolgen als die jeweils auf eine Druckabsenkung folgende Druckaufbauperiode.

8. Verfahren nach einem der vorhergehenden Ansprüche,
**dadurch gekennzeichnet,**
**daß** die Amplitude und zeitliche Aufeinanderfolge der Druckänderungen unter Berücksichtigung des Stoffumsatzes im Rohrreaktor vorgegeben werden, wozu beispielsweise die Austrittskonzentration einer Reaktionskomponente der Gasphase oder der Grad der erzielten Reaktionsumsetzung bestimmt werden.

9. Verfahren nach einem der vorhergehenden Ansprüche,
**dadurch gekennzeichnet,**
**daß** als flüssige Phase außer Gemischen mehrerer Flüssigkeiten, Flüssig-Flüssig-Systeme wie Emulsionen und/oder Flüssig-Fest-Systeme wie Suspensionen mit unlöslichem Feststoff oder Sole mit partiell löslichem Feststoff zugeführt werden.

10. Verfahren nach einem der vorhergehenden Ansprüche,
**dadurch gekennzeichnet,**
**daß** als Mehrphasenreaktion die Ozonierung von ungesättigten Fettsäuren, insbesondere der Ölsäure, und die oxidative Spaltung von Ozoniden unter Zufuhr der an sich bekannten Flüssigkeiten und Gase durchgeführt werden.

11. Vorrichtung zur Durchführung des Verfahrens nach einem der vorhergehenden Ansprüche,
**gekennzeichnet durch** einen Rohrreaktor mit einer oder mehreren zeitgesteuert und/oder sensorgesteuert betreibbaren Einrichtungen zur zeitweisen Druckabsenkung der Gasphase an der Gaszufuhr in den Rohrreaktor und/oder zur wiederholten zeitweisen Druckerhöhung der Gasphase an der Gasableitung aus dem Rohrreaktor.

12. Vorrichtung nach Anspruch 11,
**dadurch gekennzeichnet,**
**daß** die Einrichtungen zur Druckänderung die Druckabsenkung bzw. Druckerhöhung mit einer druckgesteuerten, schwingenden Flüssigkeitssäule hervorrufen.

13. Vorrichtung nach Anspruch 11 oder 12,
**dadurch gekennzeichnet,**
**daß** der Rohrreaktorinnenraum in bekannter Weise mit einschlägigen für die jeweilige Reaktion geeigneten Einbauten, Füllkörpern, statischen Mischelementen oder anderen Strukturen zur Erzielung einer vergrößerten Reaktionsoberfläche inhomogen bepackt ist und vorzugsweise zwischen den unterschiedlichen Packungen gelochte oder gitterartige Trägerscheiben aufweist.

14. Vorrichtung nach einem der Ansprüche 11 bis 12,
**dadurch gekennzeichnet,**
**daß** zur Gaszufuhr ein im unteren Reaktorbereich seitlich an den Rohreaktor angesetzter Stutzen vorgesehen ist, der sich schräg nach oben erstreckt und vorzugsweise in den bereits bepackten Reaktorbereich mündet.

## Claims

1. Process for carrying out a multi-phase reaction in a counter-current tube reactor, which is provided with or without built-in packings enlarging the reaction interfaces and in which components of a liquid phase flowing downwards in the tube reactor as a thin film and components of a continuous gas phase flowing upwards in the tube reactor are brought to material exchange or reaction, respectively, **characterized in that** the gas phase is pulsed by repeated temporary lowering of pressure at the gas inlet into the tube reactor and/or by repeated temporary increasing of pressure at the gas outlet from the tube reactor in such a way as to counteract both thin film thickness growth and liquid phase stagnation.

2. Process according to Claim 1, **characterized in that** the reactor throughputs of the liquid and gaseous phases are predefined at such high values that, without the gas phase pulsation, liquid phase stagnation would occur at the built-in packings in the interior of the tube reactor or such that, in a tube reactor without built-in packings causing stagnation points, the thin film thickness of the liquid phase would increase to a no longer acceptable thickness.

3. Process according to Claim 1 or 2, **characterized in that** the pressure is temporarily changed at least whenever liquid phase stagnation or an unacceptable thin film thickness growth occurs and the temporary pressure change is adjusted such that the stagnated liquid phase flows off because of a resultant relative pressure decrease below the stagnation point or the thin film thickness decreases to a desired value because of a resultant decrease in the gas phase velocity.

4. Process according to one of the preceding claims, **characterized in that** the gas phase is pulsed so that the upward movement of the gas phase is temporarily stopped and, at the same time, the direction of movement of the gas phase is preferably reversed so that the gas phase temporarily moves downwards.

5. Process according to one of the preceding claims, **characterized in that** the pressure of the gas phase is periodically pulsed, preferably at the gas feed into the tube reactor, so that pressure oscillation of the gas phase occurs in the tube reactor.

6. Process according to Claim 5, **characterized in that** the period and amplitude of the predefined periodic pressure pulsation are optionally predefined in a fixed or variable manner and, for example, in accordance with a sinusoidal oscillation, a saw-tooth oscillation or a square-wave oscillation.

7. Process according to one of the preceding claims, **characterized in that** the temporary pressure reductions are carried out in a shorter time period than the pressure build-up period in each case following a pressure reduction.

8. Process according to one of the preceding claims, **characterized in that** the amplitude and time sequence of the pressure changes are predefined while taking into account the material turnover in the tube reactor, for example the exit concentration of a reaction component of the gas phase or the level of the reaction turnover achieved being determined.

9. Process according to one of the preceding claims, **characterized in that** the liquid phase fed in, apart from mixtures of a plurality of liquids, comprises liquid-liquid systems such as emulsions and/or liquid-solid systems such as suspensions containing an insoluble solid substance or brine solutions containing partially soluble solid material.

10. Process according to one of the preceding claims, **characterized in that** the multi-phase reaction is ozonization of unsaturated fatty acids, in particular oleic acid, and the oxidative splitting of ozonides is carried out by feeding in liquids and gases known per se.

11. Apparatus for carrying out the method according to one of the preceding claims, **characterized by** a tube reactor having one or more devices that can be operated under time control and/or sensor control for the temporary lowering of the pressure of the gas phase at the gas feed into the tube reactor and/or for the repeated temporary increasing of the pressure of the gas phase at the gas exit from the tube reactor.

12. Apparatus according to Claim 11, **characterized in that** the devices for changing the pressure effect the pressure reduction and/or pressure increase by means of a pressure-controlled, oscillating liquid column.

13. Apparatus according to claim 11 or 12, **characterized in that** the interior of the tube reactor is packed inhomogeneously in a known manner with appropriate built-in packings, filling elements, static mixing elements or other structures suitable for the respective reaction in order to achieve an enlarged reaction surface and preferably has perforated or gridlike carrier discs between the different packings.

14. Apparatus according to either of claims 11 and 12, **characterized in that** the gas is fed into the tube reactor via a connecting piece which is attached to the side of the tube reactor in the lower reactor area and extends obliquely upwards and preferably leads into the reactor area already provided with built-in packings.

## Revendications

1. Procédé pour mettre en oeuvre une réaction polyphasée dans un réacteur à tuyau fonctionnant selon le principe des courants inverses, le réacteur étant pourvu ou dépourvu d'inserts augmentant les surfaces limites de réaction et dans lequel des composants d'une phase liquide s'écoulant vers le bas dans le réacteur à tuyau sous la forme d'un film d'écoulement et des composants d'une phase gazeuse continue s'écoulant vers le haut dans le réacteur à tuyau étant amenés en transfert de matière respectivement en réaction, **caractérisé en ce que** la phase gazeuse est pulsée par diminution temporaire et répétée de pression au niveau de l'alimentation de gaz dans le réacteur à tuyau et/ou par augmentation temporaire et répétée de pression au niveau de l'évacuation de gaz hors du réacteur à tuyau de telle sorte que l'on agit contre une croissance d'épaisseur de film d'écoulement et contre une stagnation de phase liquide.

2. Procédé selon la revendication 1, **caractérisé en ce que** les débits de réacteur des phases liquide et gazeuse sont fixés à des valeurs tellement hautes auxquelles, sans la pulsation de phase gazeuse dans l'intérieur du réacteur à tuyau au niveau des inserts, on parviendrait à une stagnation de la phase liquide ou auxquelles, dans un réacteur à tuyau sans insert provoquant des points de stagnation, l'épaisseur de film d'écoulement de la phase liquide augmenterait à des valeurs qui ne seraient plus acceptables.

3. Procédé selon la revendication 1 ou 2, **caractérisé en ce que** la pression est modifiée au moins toujours temporairement, lorsqu'une stagnation de phase liquide ou une croissance d'épaisseur de film d'écoulement qui n'est plus acceptable survient, la modification de pression temporaire est déterminée de telle façon que la phase liquide qui stagne s'écoule en dessous du point de stagnation par une diminution de pression relative résultante ou l'épaisseur de film d'écoulement diminue par une diminution résultante de la vitesse de phase gazeuse vers une valeur souhaitée.

4. Procédé selon l'une des revendications précédentes, **caractérisé en ce que** la phase gazeuse est pulsée de telle sorte que le déplacement vers le haut de la phase gazeuse est temporairement interrompu et à cet effet de préférence la direction de déplacement de la phase gazeuse est inversée de sorte que la phase gazeuse se déplace temporairement vers le bas.

5. Procédé selon l'une des revendications précédentes, **caractérisé en ce que** la pression de la phase gazeuse, de préférence au niveau de l'alimentation de gaz dans le réacteur à tuyau, est pulsée périodiquement de sorte que dans le réacteur à tuyau se produit une oscillation de pression de la phase gazeuse.

6. Procédé selon la revendication 5, **caractérisé en ce que** la longueur de période et l'amplitude de la modification de pression périodique prédéterminée est déterminée au choix de manière fixe ou variable et par exemple de manière correspondante à une oscillation sinusoïdale, une oscillation en dent de scie ou une oscillation rectangulaire.

7. Procédé selon l'une des revendications précédentes, **caractérisé en ce que** les chutes de pression temporaires se produisent dans une période de temps plus courte que la période d'augmentation de pression qui suit respectivement une chute de pression.

8. Procédé selon l'une des revendications précédentes, **caractérisé en ce que** l'amplitude et la séquence temporelle des modifications de pression sont prédéterminées en fonction de la conversion de matière dans le réacteur à tuyau, et à cet égard la concentration de sortie d'un composant de réaction est par exemple adaptée à la phase gazeuse ou au degré de transformation de réaction obtenue.

9. Procédé selon l'une des revendications précédentes, **caractérisé en ce que** en tant que phase liquide excepté des mélanges de plusieurs liquides, on alimente des systèmes liquide-liquide comme des émulsions et/ou des systèmes liquide-solide comme des suspensions avec des solides insolubles ou des saumures avec des solides partiellement solubles.

10. Procédé selon l'une des revendications précédentes, **caractérisé en ce que**, en tant que réaction polyphasée on met en oeuvre l'ozonisation d'acide gras non saturés, en particulier d'acide oléique et la dissociation oxydative d'ozonides par alimentation de liquide et de gaz connus en soi.

11. Dispositif pour la mise en oeuvre du procédé selon l'une des revendications précédentes, **caractérisé par** un réacteur à tuyau comprenant un ou plusieurs dispositif(s) pouvant fonctionner en étant commandé(s) temporellement et/ou par capteur pour réaliser une chute de pression temporaire de la phase gazeuse au niveau de l'alimentation de gaz dans le réacteur à tuyau et/ou une augmentation de pression temporaire répétée de la phase gazeuse au niveau de l'évacuation de gaz hors du réacteur à tuyau.

12. Dispositif selon la revendication 11, **caractérisé en ce que** les dispositifs pour modifier la pression génèrent la chute de pression respectivement l'augmentation de pression avec une colonne de fluide oscillante commandée en pression.

13. Dispositif selon la revendication 11 ou 12, **caractérisé en ce que** l'espace interne du réacteur à tuyau est chargé de manière connue en soi de manière hétérogène avec des inserts, des corps de remplissage, des éléments composés statiques et/ou d'autres structures respectifs adaptées à la réaction respective pour obtenir une surface supérieure de réaction accrue et comprend de préférence entre les différentes charges des disques de support troués ou réalisés sous forme de grille.

14. Dispositif selon l'une des revendications 11 à 12, **caractérisé en ce que** pour l'alimentation de gaz il est prévu une tubulure rapportée dans la zone de réacteur inférieure latéralement au réacteur à tuyau, la tubulure s'étendant de manière inclinée vers le haut et débouche de préférence dans la zone de réacteur déjà chargée.
